Europäisches Patentamt

European Patent Office

Office européen des brevets

(19)

(11) Numéro de publication: **0 242 308**
**A1**

(12) ## DEMANDE DE BREVET EUROPEEN

(21) Numéro de dépôt: **87400906.1**

(22) Date de dépôt: **17.04.87**

(51) Int. Cl.⁴: **G 09 F 13/18**

(30) Priorité: **18.04.86 FR 8605626**

(43) Date de publication de la demande: **21.10.87**
**Bulletin 87/43**

(84) Etats contractants désignés: **AT BE CH DE ES GB GR IT LI LU NL SE**

(71) Demandeur: **Blanchet, Pierre Alexandre, Avenue du 11 Novembre, F-87250 Bessines (FR)**

(72) Inventeur: **Blanchet, Pierre Alexandre, Avenue du 11 Novembre, F-87250 Bessines (FR)**

(74) Mandataire: **Bruder, Michel, Cabinet Michel Bruder 10, rue de la Pépinière, F-75008 Paris (FR)**

(54) **Dispositif d'affichage lumineux.**

(57) Un dispositif d'affichage lumineux de documents translucides comporte au moins une source lumineuse (2, 3) émettant un flux de lumière qui pénètre dans une plaque de matière transparente et en ressort, après avoir rencontré des stries (4) dont la profondeur va en croissant au fur et à mesure que l'on s'éloigne de la source lumineuse éclairant le chant (1a, 1b) de la plaque.

Pour améliorer l'éclairement d'un document les stries individuelles (4, 5) sont réparties en lignes parallèles au chant éclairé de la plaque, en étant espacées les unes des autres sur chaque ligne, la longueur (l) des stries individuelles (4, 5) sur leurs lignes respectives augmentant et l'intervalle (a) sur une même ligne, entre les stries individuelles (4, 5), diminuant au fur et à mesure que l'on s'éloigne de la source lumineuse (2, 3).

La présente invention concerne un dispositif d'affichage lumineux de documents translucides comportant au moins une source lumineuse émettant un flux de lumière qui pénétre dans une plaque de matière transparente d'indice de réfraction élevé, y chemine par réflexion totale et en ressort par des éléments réémetteurs de lumière tels que des inclusions, reliefs ou cavités formant rupture de dioptre, pour éclairer par transparence un document translucide placé sur la face antérieure de la plaque.

On connaît déja des dispositifs de ce type tels que décrits dans les brevets GB-A-2 017 997, US-A-4 373 282 et FR -E-30 346

La présente invention concerne des perfectionnements apportés à un tel dispositif d'affichage lumineux dans le but d'améliorer l'uniformité de la répartition du flux lumineux sur toute la surface du dispositif.

A cet effet ce dispositif d'affichage lumineux de documents translucides comportant au moins une source lumineuse émettant un flux de lumière qui pénétre dans une plaque de matière transparente et en ressort, après avoir rencontré des éléments réémetteurs de lumière tels que des inclusions, reliefs ou cavités, pour éclairer par transparence le document translucide placé sur la face antérieure de la plaque, les éléments réémetteurs de lumière portés par la plaque étant agencés et/ou répartis de manière que leur pouvoir de réémission de la lumière aille en croissant au fur et à mesure que l'on s'éloigne de la source lumineuse, la plaque de matière transparente du dispositif portant, sur l'une au moins de ses faces antérieure et postérieure , des stries dont la profondeur va en croissant au fur et à mesure que l'on s'éloigne de la source lumineuse éclairant le chant de la plaque, est caractérisé en ce que les stries individuelles sont réparties en lignes parallèles au chant éclairé de la plaque, en étant espacées les unes des autres sur chaque ligne, la longueur des stries individuelles sur leurs lignes respectives augmentant et l'intervalle sur une même ligne, entre les stries individuelles , diminuant au fur et à mesure que l'on s'éloigne de la source lumineuse .

On décrira ci-après,à titre d'exemple non limitatif, une forme d'exécution de la présente invention,en référence au dessin annexé sur lequel :

La figure 1 est une vue en coupe verticale d'un dispositif d'affichage lumineux suivant l'invention.

La figure 2 est une vue en élévation du dispositif de la figure 1.

Les figures 3 et 4 sont des vues en coupe verticale de variantes d'exécution du dispositif suivant l'invention.

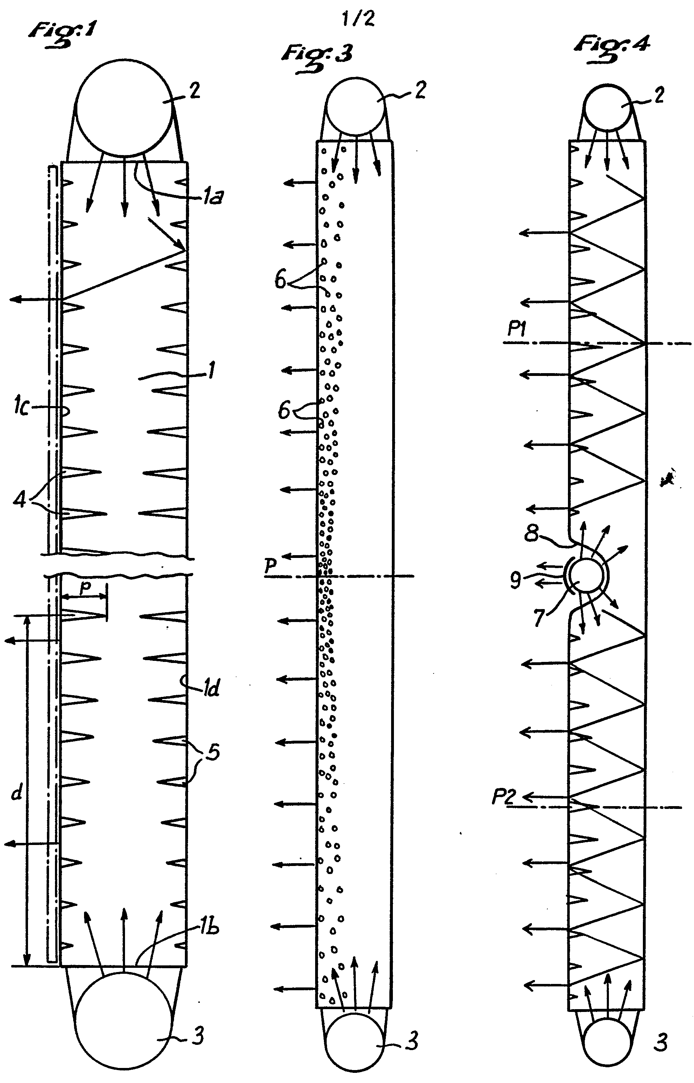

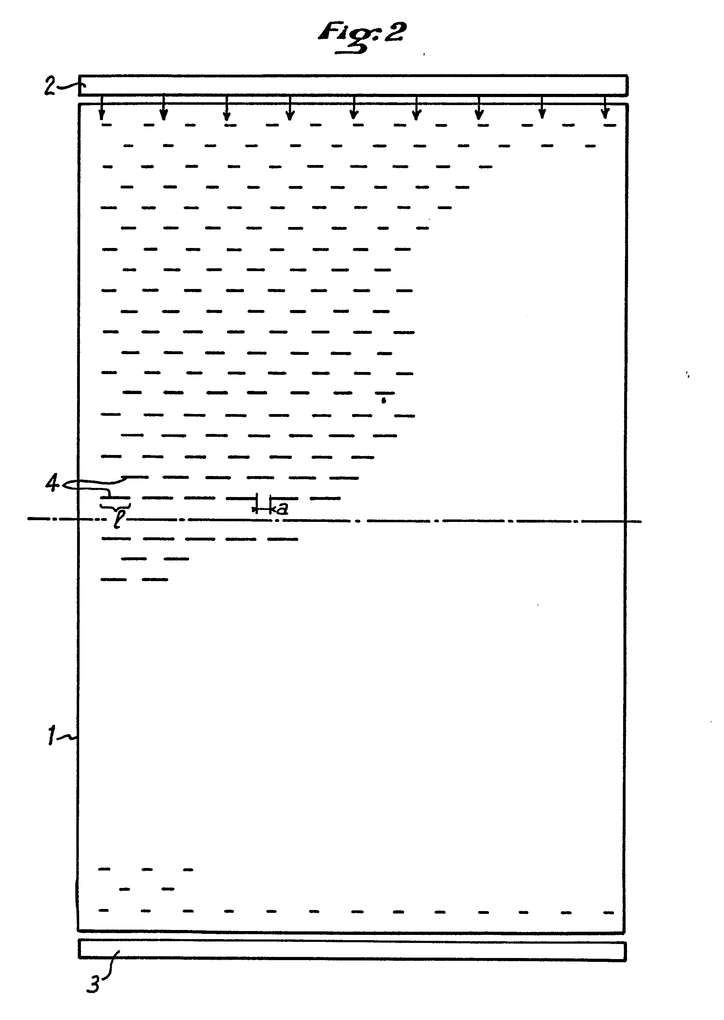

Le dispositif d'affichage lumineux suivant l'invention qui est représenté sur les figures 1 et 2 comprend une plaque rectangulaire 1, en une matière transparente à indice de réfraction élevé. Sur deux chants opposés 1a et 1b de cette plaque sont montées deux lampes tubulaires 2 et 3 émettant des flux lumineux qui pénètrent verticalement, respectivement vers le bas et vers le haut, dans la plaque 1, à travers ses chants respectifs 1a et 1b. Ces flux lumineux cheminent à l'intérieur de la plaque 1, par réflexion totale, en s'atténuant progressivement en direction du plan horizontal de symétrie P du dispositif. Le flux lumineux réfracté qui sort de la face antérieure 1c de la plaque, est utilisé pour éclairer par transparence un document translucide indiqué, en trait mixte sur la figure 1, lequel est appliqué sur la face antérieure 1c de la plaque 1.

La plaque transparente 1 est pourvue, sur sa face antérieure 1c, de stries 4 qui sont réparties du haut en bas sur cette face antérieure 1c, ces stries jouant le rôle d'éléments réémetteurs de lumière.

Ces stries 4 qui s'étendent horizontalement comme on peut le voir sur la figure 2, ont une profondeur $p$ qui va en croissant en direction du plan horizontal de symétrie P du dispositif; autrement dit cette profondeur augmente avec la distance $d$ de la strie 4 par rapport à la lampe 2,3 la plus proche, c'est-à-dire au chant 1a ou 1b.

Cette caractéristique permet d'obtenir une répartition uniforme, sur la face antérieur 1c, de la lumière émise par les deux lampes 2,3.

Le dispositif d'affichage lumineux suivant l'invention comporte également avantageusement des stries 5 sur la face postérieure 1d de la plaque transparente 1. Ces stries 5 contribuent également à l'obtention d'une répartition uniforme de la lumière dans la plaque 1.

Les stries 4 et 5 sont réparties en lignes horizontales superposées et elles sont espacées les unes des autres sur chaque ligne dans le sens horizontal. Chacune des stries a une longueur $l$ et est séparé des stries voisines d'une distance $a$. La longueur $l$ des stries individuelles 4 et 5 va en augmentant au fur et à mesure que l'on s'éloigne des sources lumineuses 2 et 3, vers le plan de symétrie central P, et l'intervalle horizontal $a$ entre les stries individuelles va en diminuant dans cette direction.

Les stries 4,5 sont de préférence décalées les unes par rapport aux autres, d'une ligne horizontale à la suivante, pour éviter de se faire de l'ombre.

Dans la variante d'exécution de l'invention représentée sur la figure 3 les éléments réémetteurs de lumière prévus dans la plaque transparente sont constitués par des inclusions 6, telles que des microbilles ou microbulles . Ces inclusions 6 sont alors réparties dans la plaque de manière que leur densité aille en croissant à partir des sources lumineuses 2,3 en direction du plan de symétrie P du dispositif.

Suivant une autre variante de réalisation, représentée sur la figure 4, laquelle est applicable à un panneau d'affichage de grande dimension, ce panneau comprend une lampe tubulaire intermédiaire 7, parallèle aux deux lampes extrêmes 2,3 et qui est logée dans une gorge 8 creusée dans la face antérieure 1c (ou postérieure 1d). Dans ce cas les stries 4,5 ou autre inclusions sont réparties comme précédemment, avec une disposition symétrique par rapport à deux plans horizontaux P1,P2 situés respectivement à mi-distance entre la lampe intermédiaire 7 et les lampes extrêmes 2,3.

Par ailleurs un écran translucide 9 est avantageusement disposé en avant de la lampe intermédiaire 7, pour laisser passer directement vers l'avant une partie du flux lumineux émis par la lampe 7.

Dans toutes les formes d'exécution de l'invention décrites ci-dessus, le dispositif d'affichage lumineux peut être éventuellement complété par une surface réfléchissante (miroir, papier blanc) disposée contre sa face postérieure 1d.

REVENDICATIONS

1- Dispositif d'affichage lumineux de documents translucides comportant au moins une source lumineuse émettant un flux de lumière qui pénétre dans une plaque de matière transparente et en ressort, après avoir rencontré des éléments réémetteurs de lumière tels que des inclusions, reliefs ou cavités, pour éclairer par transparence le document translucide placé sur la face antérieure de la plaque, les éléments réémetteurs de lumière portés par la plaque étant agencés et/ou répartis de manière que leur pouvoir de réémission de la lumière aille en croissant au fur et à mesure que l'on s'éloigne de la source lumineuse , la plaque de matière transparente du dispositif portant, sur l'une au moins de ses faces antérieure et postérieure , des stries dont la profondeur va en croissant au fur et à mesure que l'on s'éloigne de la source lumineuse éclairant le chant de la plaque, caractérisé en ce que les stries individuelles (4,5) sont réparties en lignes parallèles au chant éclairé de la plaque, en étant espacées les unes des autres sur chaque ligne, la longueur (1) des stries individuelles (4,5) sur leurs lignes respectives augmentant et l'intervalle (a) sur une même ligne, entre les stries individuelles (4,5), diminuant au fur et à mesure que l'on s'éloigne de la source lumineuse (2,3).

2.- Dispositif suivant la revendication 1 caractérisé en ce que les stries individuelles (4,5) sont décalées les unes par rapport aux autres, d'une ligne de stries à la suivante.

3.- Dispositif suivant la revendication 1 caractérisé en ce que les éléments réémetteurs de lumière portés par la plaque transparente (1) sont constitués par des inclusions (6), telles que des microbilles ou microbulles, et ces inclusions sont réparties dans la plaque de manière que leur densité aille en croissant à partir des sources lumineuses (2,3) en direction du plan de symétrie (P) du dispositif.

4.- Dispositif suivant l'une quelconque des revendications précédentes caractérisé en ce qu'il comprend une source lumineuse intermédiaire (7), parallèle aux deux sources lumineuses (2,3) extrêmes, logée dans une gorge (8) creusée dans la face antérieure (1c) ou postérieure (1d) de la plaque (1), et les stries individuelles (4,5) ou les inclusions sont réparties avec une disposition symétrique par rapport à deux plans horizontaux (P1,P2) situés respectivement à mi-distance entre la source lumineuse intermédiaire (7) et les sources lumineuses (2,3) extrêmes.

5.- Dispositif suivant la revendication 4 caractérisé en ce qu'il comporte un écran translucide (9) disposé en avant de la source lumineuse intermédiaire (7).

6.- Dispositif suivant l'une quelconque des revendications précédentes caractérisé en ce qu'il comporte également des stries individuelles (4,5) de même répartition à la fois sur la face antérieure (1c) et sur la face postérieur (1d) de la plaque transparente (1).

Fig.1

2

1a

1

1c

4

P

1d

5

d

1b

3

Fig.3

2

6

6

P

3

Fig.4

2

P1

8

9

7

P2

3

Fig. 2

0242308

Numero de la demande

EP 87 40 0906

# RAPPORT DE RECHERCHE EUROPEENNE

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | GB-A-2 017 997 (J.C. DECAUX PARIS PUBLICITE ABRIBUS) * Figure 1; page 1, lignes 56-105 * | 1,5,6 | G 09 F 13/18 |
| A | | 2,3 | |
| | --- | | |
| X,D | US-A-4 373 282 (HUGHES AIRCRAFT CO.) * Figures 1-3; colonne 6, lignes 48-63 * | 1,2,5 | |
| A | | 3,6 | |
| | --- | | |
| X | DE-A-2 511 030 (SIKOB SVENSK I.K.O.B. AB) * Figures 1,2; page 9, revendication 1 * | 1 | DOMAINES TECHNIQUES RECHERCHES (Int. Cl.4) |
| A | | 4,5 | G 09 F |
| | --- | | |
| A | FR-E- 30 346 (PORTAL) * En entier * | 1,4,5 | |
| | --- | | |
| A | GB-A- 523 706 (MOORE) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 23-06-1987 | ALLEN E.F. |

Office européen
des brevets

**RAPPORT DE RECHERCHE EUROPEENNE**

Numero de la demande

EP 87 40 0906

| DOCUMENTS CONSIDERES COMME PERTINENTS | | | Page 2 |
|---|---|---|---|
| Catégorie | Citation du document avec indication, en cas de besoin, des parties pertinentes | Revendication concernée | CLASSEMENT DE LA DEMANDE (Int Cl.4) |
| A | EP-A-0 167 721 (MITSUBISHI RAYON CO. LTD) * Figures 11A-11D; page 14, lignes 11-21 * | 4 | |
| P,A | FR-A-2 576 441 (BLANCHET) * En entier * | 1,3,5 | |
| | | | DOMAINES TECHNIQUES RECHERCHES (Int Cl.4) |

Le présent rapport de recherche a été établi pour toutes les revendications

| Lieu de la recherche | Date d'achèvement de la recherche | Examinateur |
|---|---|---|
| LA HAYE | 23-06-1987 | ALLEN E.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82